# EUROPEAN PATENT APPLICATION

(11) **EP 2 131 587 A2**
(43) Date of publication of application: **09.12.2009**
(21) Application number: 09011610.4
(22) Date of filing: 12.01.2007
(51) Int. Cl.: H04N 7/173, H04N 9/82

(54) **System and method of parental control over multimedia**

(30) Priority: 21.06.2006 US 472114
(62) Divisional of application: 07756351.8
(71) Applicant: Sony Ericsson Mobile Communications AB, 221 88 Lund (SE)
(72) Inventor: Carpenter, Paul, Raleigh, North Carolina 27603 (US)
(74) Representative: Sticht, Andreas

(57) **Abstract**

A device-independent authentication system and method allows a parent to control access to selected versions of multimedia content to prevent some viewers from viewing inappropriate material. The multimedia content may be, for example, one or more different versions of the same movie or game distributed on a disk, or a movie ordered from a service provider. The system and method authenticates users based on authentication data provided by the parent and on a content based characteristic associated with the selected content. Successful authentication permits a person to view the desired content, while unsuccessful authentication prevents viewing the desired content.

## Description

### BACKGROUND

The present invention relates to systems and methods of parental control over multimedia.

Many types of systems utilize parental controls to assist parents in regulating the games their children play. For example, X-BOX LIVE is a system that facilitates gaming via the Internet. While some of the games are child or family-friendly, others are not. Therefore, systems like X-BOX LIVE require a parent to register with a credit card as part of an initial set-up routine. The registration verifies the registrant's age and ensures payment for the service. A player, such as a minor child, cannot gain access to play games until registration is complete. Once registered, however, any player may play almost any game regardless of its content.

Similar controls also allow parents to control which movies their children watch. Some cable providers, for example, provide embedded software in their cable boxes that permit parents to "lock" certain channels or movie types they deem inappropriate for their children. To view the programming on a channel having a parental lock, a person must enter the correct access code. Likewise, televisions use an embedded V-CHIP to control access to certain channels or programming. To control access to "locked" channels or programming in V-CHIP enabled devices, a user may navigate a menu system to lock and unlock desired channels.

Most parental control systems are standalone systems, and thus, they are limited in their ability to assist parents in controlling what movies and games their child play and watch. For example, the V-CHIP functions to control programming only on the TV set on which it is installed. Likewise, the parental "lock" used by some cable service providers only controls programming to the particular TV set connected to the cable box. Thus, to ensure that similar controls operate on multiple TV sets, parents might be required to perform the same set-up and/or locking procedures multiple times. Other systems such as X-BOX LIVE may initially regulate content, but allow unfettered access to anyone after registration.

### SUMMARY

The present invention provides a device-independent authentication system and method that allows a parent to control access to selected versions of multimedia content to prevent some viewers from viewing inappropriate material. The multimedia content may comprise, for example, one or more different versions of a movie or game distributed on a disk, or a movie or game ordered from a service provider. During the authentication process, a parent or other guardian provides authentication data associated with a selected version of the movie or game. If the authentication data is valid, the user is permitted to view the selected version. If the authentication data is not valid, the user is prevented from viewing the selected version.

In one embodiment, the present invention comprises a circuit disposed within a device such as a DVD player or a television set. The circuit includes memory to store authentication logic and a controller to perform the authentication process in accordance with the authentication logic. The circuit may communicate with a remote server via a public network to authenticate the user for the selected version.

In another embodiment, the circuit is disposed within the remote server, and communicates with the device that outputs the selected version to the user. In response to a request from the device, the circuit authenticates the user and returns a response to the device.

In another embodiment, the authentication logic is stored on a computer readable medium such as a DVD or CD that also includes multiple versions of a movie or game. A controller in the device may read the authentication logic from the medium, and perform the authentication process in accordance with those instructions. In these embodiments, the controller may communicate with the remote server over the public network to authenticate the user.

Accordingly, the present invention provides, in one embodiment, a circuit to control access to multimedia content. The circuit comprises memory to store authentication logic, a controller communicatively connected to the memory and configured to execute the authentication logic to: determine a content-based characteristic for each of a plurality of different versions of a multimedia presentation, authenticate a user for one or more of the plurality of different versions based on the content-based characteristics and on authentication data provided by the user, and generate a control signal to cause a device to output a selected version if the authentication data provided by the user is valid for the content-based characteristic associated with the selected version.

In one embodiment, the circuit is disposed within the device that renders the selected version of the multimedia presentation to the user. The device may be, for example, a DVD player or a television.

In another embodiment, the controller is configured to send the authentication data to a remote server, and generate the control signal based on an authentication result received from the remote server.

In yet another embodiment, the circuit is disposed in a remote server communicatively connected to the device that outputs the selected version of the multimedia presentation to the user. In such cases, the controller is configured to receive the authentication data from the device, authenticate the user for the content-based characteristic based on the received authentication data, and send either a positive acknowledgment or a negative acknowledgment to the device based on the authentication data.

In another embodiment, the memory comprises a computer readable medium. Each different version of the multimedia presentation and the authentication logic is stored on the computer readable medium.

The present invention also provides a method of controlling access to multimedia content. In one embodiment, the method comprises determining a content-based characteristic for each of a plurality of different versions of a multimedia presentation, authenticating a user for one or more of the plurality of different versions based on the content-based characteristics and on authentication data provided by the user, and generating a control signal to cause a device to output a selected version based on whether the authentication data provided by the user is valid for the content-based characteristic.

In one embodiment, the method further comprises storing the plurality of different versions of the multimedia presentation on a computer readable medium. In such cases, the step of determining a content-based characteristics may include determining a version of the multimedia presentation selected by the user.

In at least some cases, the method further comprises the step of storing authentication logic to authenticate the user on the computer readable medium along with the plurality of different versions of the multimedia presentation, reading the authentication logic from the computer readable medium, and executing the authentication logic to authenticate the user.

In one embodiment, authenticating the user comprises the step of sending the authentication data to a remote server; and generating the control signal to output the multimedia content based on an authentication result received from the remote server.

In some cases, the method further comprises the step of receiving the authentication data from the device, authenticating the user based on the received authentication data, and sending an authentication result to the device.

The present invention also provides a computer readable medium having multimedia content stored thereon. The multimedia content may, for example, comprise a plurality of multimedia presentations, each having a different version, and authentication logic stored along with the multimedia content. The authentication logic includes executable instructions configured to determine a content-based characteristic for each different version of the multimedia presentations, prompt a user to input authentication data, and authenticate the user for a selected version based on the content-based characteristics and on the authentication data provided by the user.

In some embodiments, the plurality of multimedia presentations stored on the computer readable medium comprises a plurality of audio files, or a plurality of video files, or a plurality of game files. Each file has a different rating.

In another embodiment, computer readable medium comprises one of a DVD and a CD that stores the plurality of presentations.

In one embodiment, the authentication logic further comprises instructions configured to a send the authentication data to a remote server, receive an authentication result from the remote server; and cause a controller executing the authentication logic to generate a control signal based on the received authentication result.

In one embodiment, the authentication logic further comprises instructions configured to cause a controller executing the authentication logic to generate a control signal to output the selected version to the user responsive to receiving an authentication result.

### BRIEF DESCRIPTION OF THE DRAWINGS

Figure 1 illustrates an exemplary system configured to operate according to one embodiment of the present invention.
Figure 2 illustrates circuitry configured to operate according to one embodiment of the present invention.
Figure 3 illustrates a method of performing an initial set-up routine according to one embodiment of the present invention.
Figure 4 illustrates one embodiment of a display screen that may be used to prompt the user to input authentication data during the initial set-up routine of Figure 3.
Figure 5 is a flow chart that illustrates a method of controlling access to a movie according to one embodiment of the present invention.
Figure 6 illustrates a display screen that might be used to prompt a person for authentication data according to one embodiment of the present invention.
Figures 7-10 illustrate other systems that might be configured to operate according to one embodiment of the present invention.

### DETAILED DESCRIPTION

The present invention provides a device-independent authentication system and method of controlling access to selected versions of multimedia content. This allows parents or guardians, for example, to prevent underage viewers from accessing inappropriate material. The multimedia content may comprise, for example, one or more different versions of a movie or game distributed on a disk, or a movie or game ordered from a service provider. A person is permitted to view and/or hear a selected version of the multimedia content upon is successful authentication.

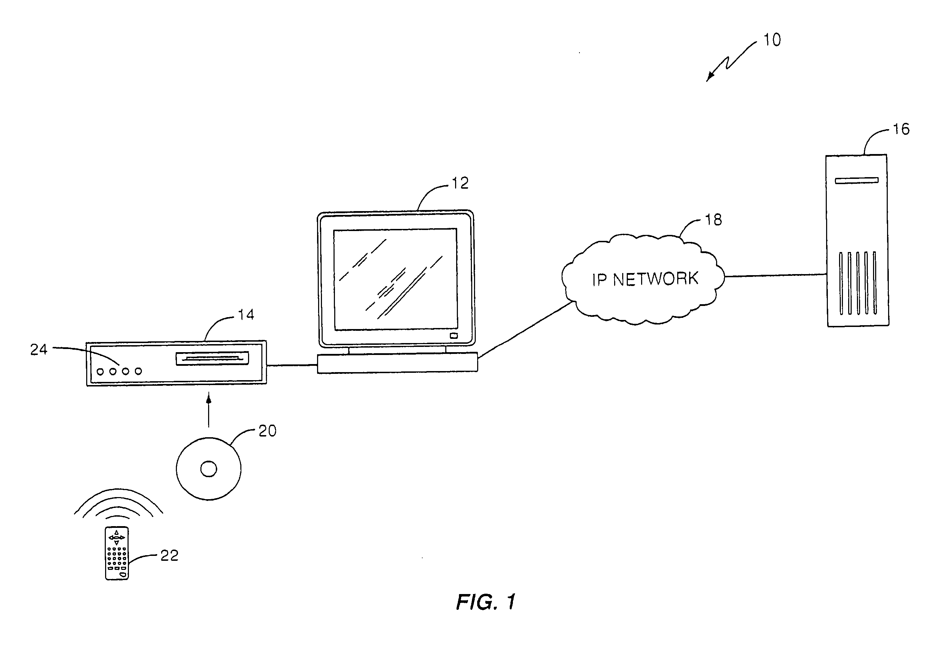

Figure 1 illustrates an exemplary system 10 configured to facilitate parental control over multimedia content according to one embodiment of the present invention. It should be noted that the embodiments illustratively describe the multimedia content as being movies and games. However, those skilled in the art should realize that the multimedia content also includes, but is not limited to, music and images. Further, the multimedia content may be distributed via a variety of media. Some examples include Compact Disks (CDs), Digital Versatile Discs or Digital Video Discs (DVDs), Optical Laser Disks, and multimedia content streamed to a user's location upon request.

System 10 comprises a television set (TV) 12 or video monitor and a DVD player 14 that may be located in a user's home, and a remotely located server 16. The server 16 may be connected to the user's home via a publicly accessible IP network 18 such as the Internet. A remote control unit 22 allows the user to generally control the operation of the TV 12 and the DVD player 14 from a remote position and, as described in more detail later, to input data in response to on-screen prompts.

In one embodiment, the DVD player 14 prompts a parent to input authentication data during a registration process or other initial set-up routine. The parent may input the authentication data using keys disposed on the remote control 22, or directly via a user interface 24 disposed on a face of the DVD player 14. The DVD player 14 then communicates the authentication data to the remote server 16 via the Internet 18 to register the user. The authentication data may comprise, for example, a credit card number and a Personal Identification Number (PIN) selected by the user. Thereafter, whenever a user inserts a DVD 20 into the DVD player 14, DVD player 14 solicits the user to select a movie version.

In this embodiment, DVD 20 comprises multiple versions of the same movie. Some may be viewable by all family members (e.g., rated "G" movies), while others may contain material a parent deems inappropriate for underage viewers (e.g., rated "R" movies). In response to the user selecting a version of the movie, DVD player 14 prompts the user for the authentication data and communicates that data to the remote server 16. Based on the authentication data, the remote server 16 determines whether the user attempting to play the movie is or is not permitted to view the selected version and returns corresponding positive acknowledgment (ACK) or negative acknowledgment (NACK) to the DVD player 14.

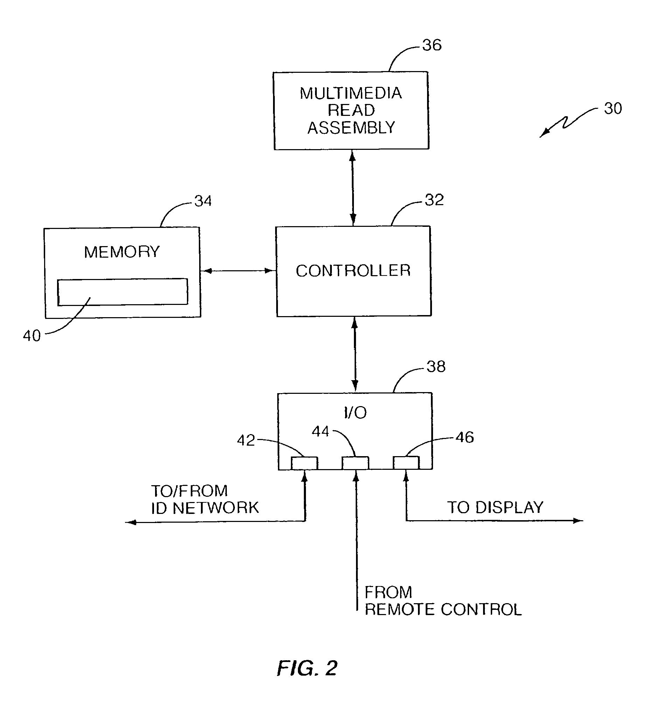

Figure 2 is a block diagram illustrating a circuit that may be used to perform the registration process and the authentication process according to one embodiment of the present invention. Circuitry 30 resides within the DVD player 14 and comprises a controller 32, memory 34, a multimedia read assembly 36, and an interface circuit 38. Controller 32 controls the operation of DVD player 14 according to instructions and data stored in memory 34. The controller 32 may be implemented as a single microprocessor or multiple microprocessors. Suitable microprocessors may include, for example, both general purpose and special purpose microprocessors such as those specially constructed to output video, audio, and other graphics. The controller 32 may be configured to control access to selected versions of movies and other multimedia content on DVD 20 according to authentication logic 40 stored in the memory 34.

Controller 32 also generates one or more control signals to cause the multimedia read assembly 36 to read the data on DVD 20 for display to the user. Different manufacturers of DVD player 14 may design their multimedia read assemblies to comprise various components. However in one embodiment, the multimedia read assembly 36 includes a drive motor (not shown) to rotate DVD 20, a laser/lens system (not shown) to read the data from the DVD 20, and a tracking mechanism (not shown) to move the laser/lens assembly over the rotating DVD 20. The operation of each of these mechanisms is well-known in the art, and thus, not described in detail here.

Controller 32 is also connected to interface circuit 38, which may comprise various busses, circuitry, and ports, to perform a variety of input/output operations. In this embodiment, interface circuit 38 includes a first port 42 to connect the DVD player 14 to the remote server 16 over the Internet, a second port 44 to receive commands and data from remote control 22, and a third port to connect the audio and video outputs of DVD player 14 to the TV 12.

Controller 32 transmits and receives signals and data to and from the remote server 16 via port 42. Port 42 may be, for example, an Ethernet port or a wireless port that operates according to standards defined for BLUETOOTH or the IEEE 802.11 family of standards. Where port 42 comprises a wireless port, DVD player 14 would also include a corresponding wireless transceiver. Port 44 may comprise an infra-red port that operates according to any of the Infrared Data Association (IrDA) family of standards. Generally, port 44 facilitates free-space communications between the DVD player 14 and the remote control 22 so that the user may control the operation of the DVD player 14 and enter the authentication data. Port 46 may be one or more video and audio connections that allow controller 32 to output the video and audio data read from DVD 20 to the TV 12. Controller 32 also outputs the various prompts for the authentication data to TV 12 over port 46.

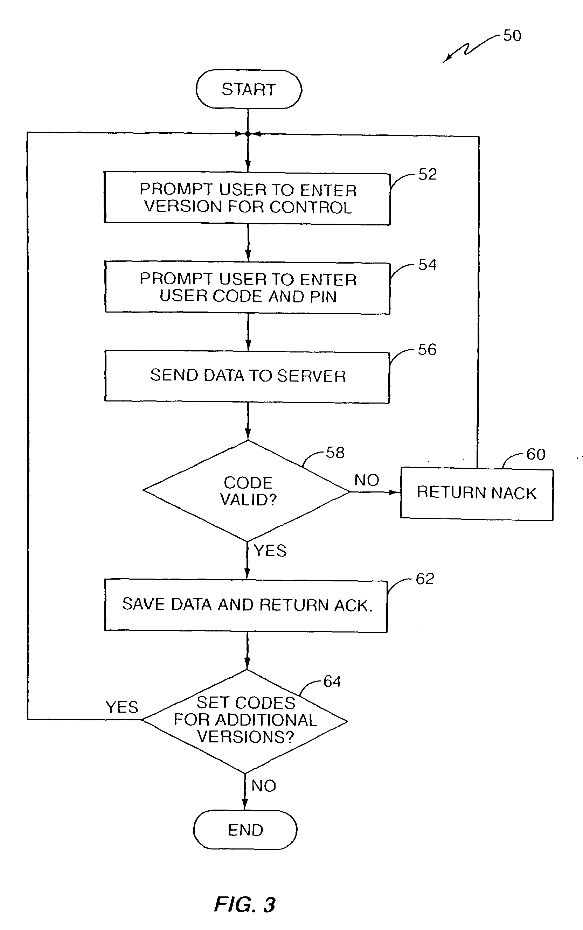

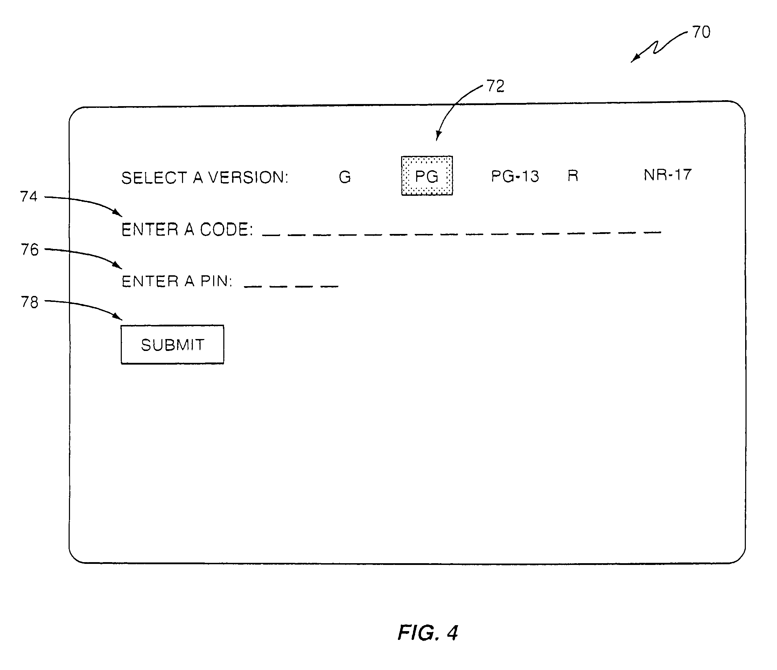

Figure 3 illustrates a method 50 wherein controller 32 performs a registration process according to authentication logic 40. Figure 4 illustrates an exemplary screen 70 used in method 50 to prompt the user for the authentication data. As seen in Figures 3 and 4, the registration process may be invoked when the user initially provides power to DVD player 14 or when the user depresses one or more pre-programmed keys on the remote control 22. Controller 32 generates a control signal that displays screen 70 to prompt the user to select a movie version to control (box 52). If the user wishes to allow unfettered access to rated "G" movies, but not to rated "PG" and above, the user might use the remote control 22 to highlight and select "PG" from a list 72 displayed on screen 70. Once the version is selected, the user inputs a user code and a PIN, which may be reflected to the user in data input areas 74, 76 provided on the screen 70 (box 54).

Both the user code and the PIN may be any alphanumeric string selected by the user inputting the data. For example, in one embodiment, the user code comprises a valid credit card number to show that the person entering the authentication data is not a minor child. Likewise, the PIN may comprise a multi-digit number known only to the user. Once the user inputs the authentication data, the user may actuate a control button 78 to send the data to the remote server 16 provided the user has an active communications link with the server 16 (box 56).

After receiving the authentication data, the remote server 16 may check to determine whether the data is valid by validating the user's credit card number (box 58). Invalid data causes the remote server 16 to return a NACK to the DVD player 14, while valid data causes the DVD player 14 to return an ACK to the DVD player 14 and save the authentication data in its memory (box 62). The user may then repeat the process as many times as desired to set additional user code/PIN combinations for other versions (box 64). After each user code/PIN combination is set, controller 32 may cause a message to be displayed on screen 70 to apprise the user of the outcome.

It should be noted that parents and guardians may control access to each version independently of other versions by entering unique user code and/or PIN combinations for each version. However, some embodiments of the present invention also permit the control of a plurality of versions in a hierarchical manner using a single user code/PIN combination. By way of example, the parent needs only to input a single user code/PIN combination for "PG" movies to control access to any movie having a rating of "PG" or above (e.g., PG," PG-13," "R," or NR-17"). This would also allow uncontrolled access to rated "G" movies. In other embodiments, a parent may control access to both "PG" and "PG-13" movies by inputting a first user code/PIN combination for "PG" rated movies, and to "R" and "NC-17" movies using a second user code/PIN combination for "R" rated movies.

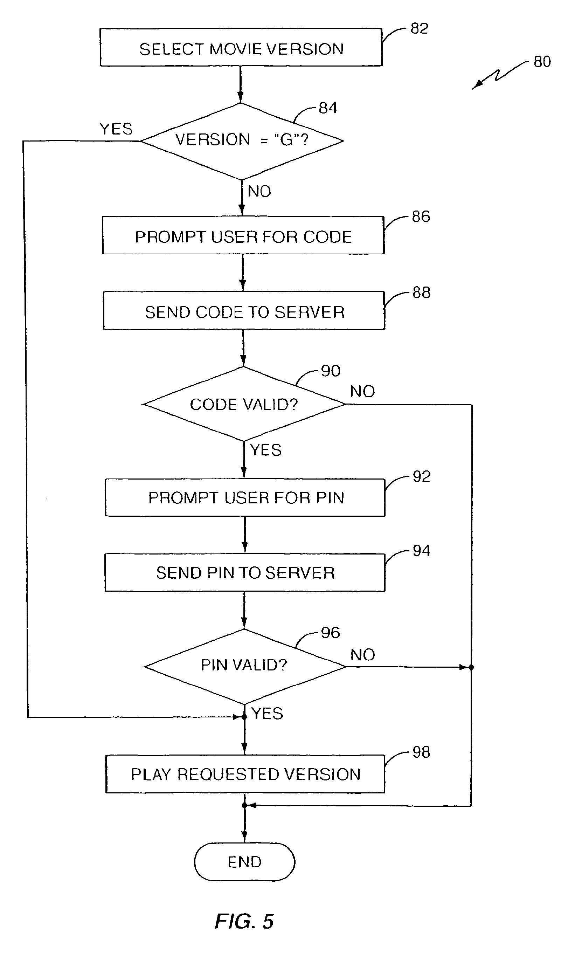

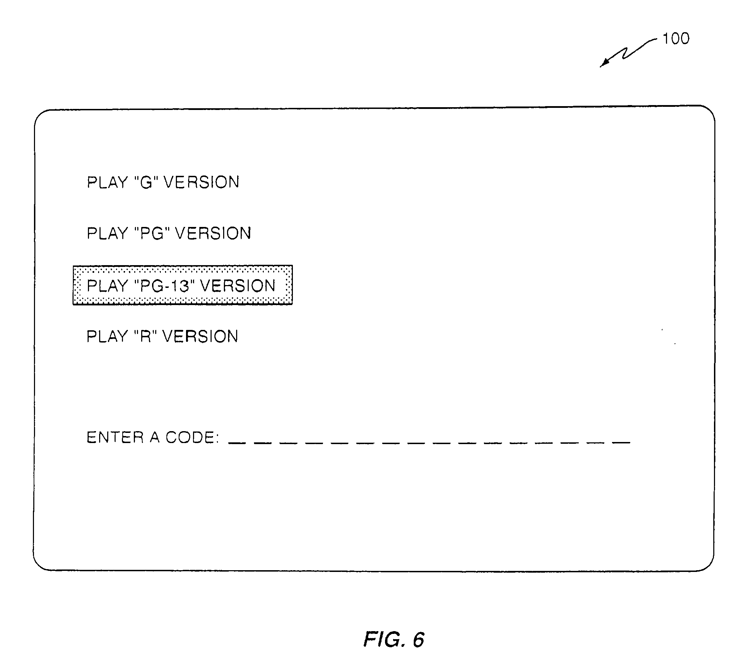

Once registered, a person wishing to view a movie on DVD 20 would be required to authenticate him or her self by inputting the correct user code-PIN combination for the particular requested version. Figure 5 illustrates a method 80 wherein controller 32 performs the authentication process according to authentication logic 40. Figures 6-7 illustrate exemplary screens 100 used in method 80 to solicit the user for the authentication data. As seen in Figures 6-7, the DVD 20 includes multiple versions of the same movie, each with a different rating.

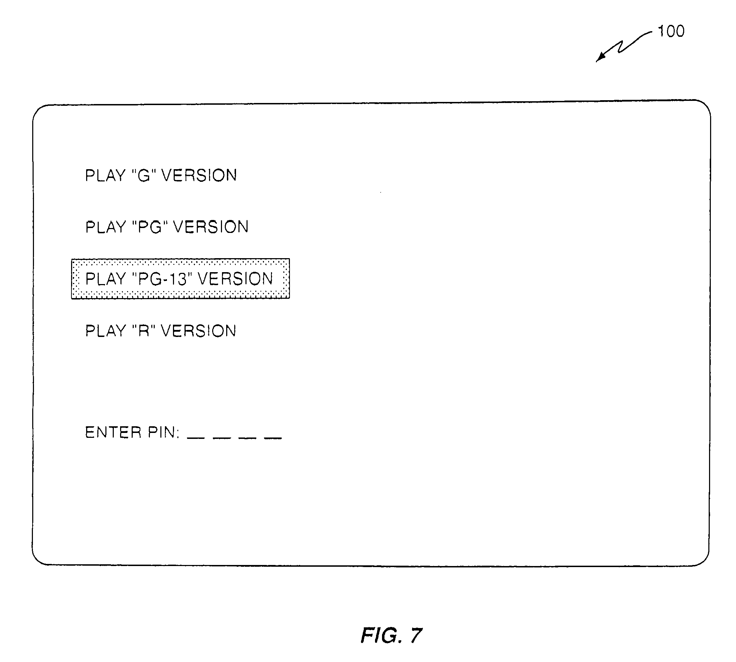

Method 80 may begin when controller 32 receives a command to play a version of a movie that has a rating that the parent or guardian wishes to block access to (box 82). The person issuing the command may be a minor child of the parent. If the person selects "G" (box 84), controller 32 simply generates a control signal to the multimedia read assembly 36 to read and render the "G" rated version of the movie. If the person selects "PG" or higher, however, controller 32 prompts the person to enter the user code (box 86) (Figure 6) and sends the user code to the remote server 16 (box 88). If the user code is not valid, (box 90) the server 16 returns a NACK and the process ends without the person viewing the requested content. If the code is valid, the server returns an ACK. The controller 32 then prompts the person to enter the PIN that corresponds to the user code (box 92) (Figure 7), and sends the PIN to the remote server 16 for validation (box 94). The remote server 16 returns an ACK or a NACK based on whether the PIN is valid. If both the user code and the PIN are valid (box 96), controller 32 generates a control signal to the multimedia read assembly to render the requested version of the movie.

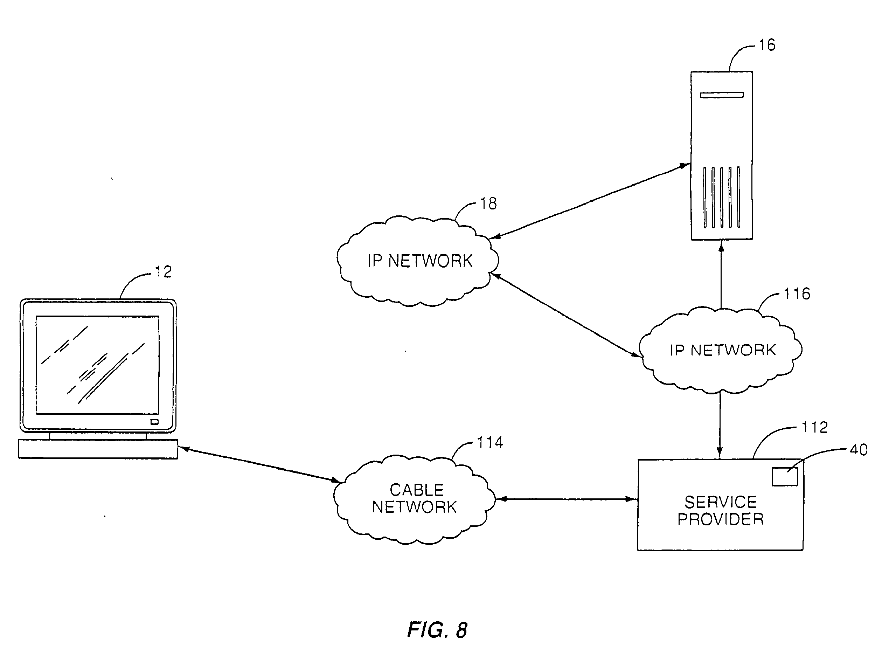

The above embodiment describes the present invention in the context of a parent selectively controlling access to multiple versions of a movie available on DVD 20. However, the present invention is not so limited. Figure 8 illustrates another embodiment where the method of the present invention is used to control access to movies, such as pay-per-view movies, streamed to the user's home. In Figure 8, the user's TV set 12 is connected to a cable service provider 112 via a cable network 114. The service provider 112 may have a server or other equipment that includes a controller operating according to authentication logic 40, and that is connected to remote server 16 via the Internet 18 or a private IP network 116.

When the user chooses a movie offered by the service provider 112, the user might be prompted to input a user code/PIN combination that is valid for the version of the selected movie. Upon receipt of the user code/PIN combination, the service provider 112 authenticates the user. By way of example, the service provider 112 might use the user code as an index into a table stored on remote server 16 to determine whether a parent or guardian has previously indicated the requested version as one requiring controlled access. If so, and provided the user code/PIN combination are valid for the requested version, the service provider 112 streams the requested movie to the person's TV 12 via the cable network 114.

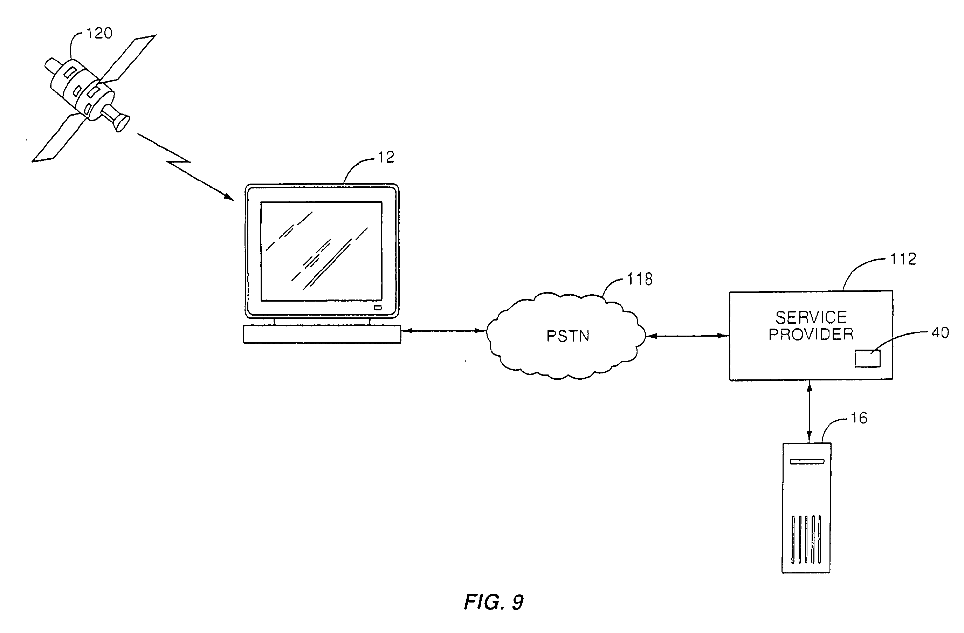

Figure 9 illustrates another embodiment wherein the service provider 112 comprises a satellite service provider. In this embodiment, service provider 112 is connected to the user's home via the Public Switched Telephone Network (PSTN), although other links such as the Internet 18 are also possible. When the user selects a movie for viewing, the service provider 112 may determine and grant/deny access to the requested movie in a manner similar to that of Figure 8.

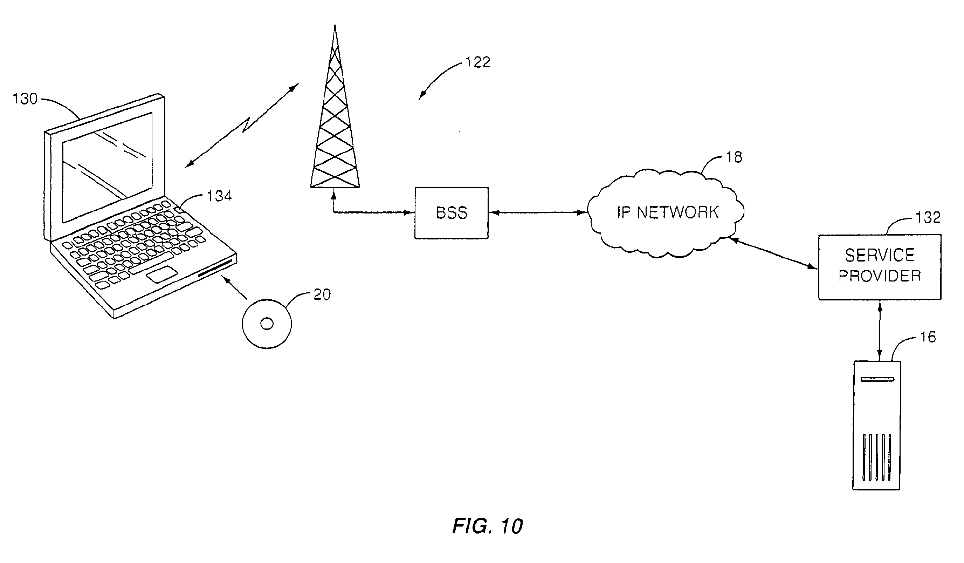

Figure 10 illustrates another embodiment wherein a user is equipped with a wireless communications device 130 such as a laptop computer that plays DVD 20. Device 130 is connected to a third party service provider 132 via a wireless communications network 122 and the Internet 18. When the user inserts DVD 20 into device 130, a controller in device 130 may generate and send wireless signals to the third party service provider 132. The wireless signals may include the rating of a movie selected from DVD 20 and a user code/PIN combination input by the user of device 120. The third party service provider 132 may determine and grant/deny access to the requested movie in a manner similar to the previous embodiments.

In the previous embodiments, the circuit 30 includes the authentication logic 40 necessary for prompting the user for the authentication data, and for authenticating the user based on that data. In other embodiments, however, the authentication logic 40 comprises one or more software modules burned onto DVD 20 along with the one or more versions of a movie. Authentication logic 40 may be stored in a fixed location agreed to by DVD makers, which is read executed before the movie is played. The software modules might comprise the instructions necessary to cause controller 32 to prompt a parent or guardian for the authentication data, communicate with the remote server 16, and generate control signals to render the requested movie based on the validity of the authentication data. Distributing the authentication logic 40 in this manner would allow the present invention to function on already existing devices without having to upgrade their components and/or firmware. It also permits the present invention to function at any location such as the user's home, or vacation spot.

In addition to movies and video, the present invention may also be used to control access to music on CDs. Some CDs, for example, might contain different versions of the same song wherein one version includes explicit lyrics while another version does not. Currently, separate versions are burned onto individual CDs and labeled accordingly. With the present invention, however, both songs may be included on the same CD saving time and distribution costs for the manufacturers. Parents or guardians may restrict access to songs having explicit lyrics in a manner similar to that described above.

The present invention may be used to restrict access to various games. As is known in the art, games have different ratings such as "E" for everyone, "T" for teen, and "M" for mature. Regardless of whether the games are offered on discs or on-line, parents or guardians may employ the present invention to restrict access to games with versions that identify them as having inappropriate content.

It should be noted that the above embodiments discuss the authentication data as being alphanumeric strings. However, other non-alphanumeric representations and symbols are also possible. By way of example, the user may choose to define the user code and/or PIN using a predetermined sequence of one or more function keys or buttons on remote control 22. In addition, controller 32 and/or authentication logic 40 may be disposed in any type of consumer electronics device capable of rendering multimedia content to a user.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A circuit (30) to control access to multimedia content comprising:
memory (34) to store authentication logic (40);
a controller (32) communicatively connected to the memory (34) and configured to execute the authentication logic (40) to:
determine a content-based characteristic for each of a plurality of different versions of a multimedia presentation;
authenticate a user for one or more of the plurality of different versions based on the content-based characteristics and on authentication data provided by the user; and
generate a control signal to cause a device to output a selected version if the authentication data provided by the user is valid for the content-based characteristic associated with the selected version.

2. The circuit of claim 1 wherein the circuit is disposed within the device that renders the selected version of the multimedia presentation to the user, and wherein the device comprises one of a DVD player (14) and a television (12).

3. The circuit of claim 1 wherein the controller (32) is configured to:
send the authentication data to a remote server (16); and
generate the control signal based on an authentication result received from the remote server (16).

4. The circuit of claim 1 wherein the circuit (30) is disposed in a remote server (16) communicatively connected to the device that outputs the selected version of the multimedia presentation to the user, and wherein the controller (32) is configured to:
receive the authentication data from the device;
authenticate the user for the content-based characteristic based on the received authentication data; and
send either a positive acknowledgment or a negative acknowledgment to the device based on the authentication data.

5. The circuit of claim 1 wherein the memory (34) comprises a computer readable medium, and wherein each different version of the multimedia presentation and the authentication logic (40) is stored on the computer readable medium.

6. A method of controlling access to multimedia content, the method comprising:
determining a content-based characteristic for each of a plurality of different versions of a multimedia presentation;
authenticating a user for one or more of the plurality of different versions based on the content-based characteristics and on authentication data provided by the user; and
generating a control signal to cause a device to output a selected version based on whether the authentication data provided by the user is valid for the content-based characteristic.

7. The method of claim 6 further comprising storing the plurality of different versions of the multimedia presentation on a computer readable medium, and wherein determining a content-based characteristics comprises determining a version of the multimedia presentation selected by the user.

8. The method of claim 7 further comprising:
storing authentication logic (40) to authenticate the user on the computer readable medium along with the plurality of different versions of the multimedia presentation;
reading the authentication logic (40) from the computer readable medium; and
executing the authentication logic to authenticate the user.

9. The method of claim 6 wherein authenticating the user comprises:
sending the authentication data to a remote server (16); and
generating the control signal to output the multimedia content based on an authentication result received from the remote server (16).

10. The method of claim 6 further comprising:
receiving the authentication data from the device;
authenticating the user based on the received authentication data; and
sending an authentication result to the device.

11. A computer readable medium comprising:
multimedia content stored thereon, the multimedia content comprising a plurality of multimedia presentations, each having a different version; and
authentication logic (40) stored along with the multimedia content, the authentication logic (40) including executable instructions configured to:
determine a content-based characteristic for each different version of the multimedia presentations;
prompt a user to input authentication data; and
authenticate the user for a selected version based on the content-based characteristics and on the authentication data provided by the user.

12. The computer readable medium of claim 11 wherein the plurality of multimedia presentations stored on the computer readable medium comprises a plurality of audio files, or a plurality of video files, or a plurality of game files, each file having a different rating.

13. The computer readable medium of claim 12 wherein the computer readable medium comprises one of a DVD (20) and a CD that stores the plurality of presentations.

14. The computer readable medium of claim 11 wherein the authentication logic (40) further comprises instructions configured to:
send the authentication data to a remote server (16);
receive an authentication result from the remote server (16); and
cause a controller (32) executing the authentication logic (40) to generate a control signal based on the received authentication result.

15. The computer readable medium of claim 11 wherein the authentication logic (40) further comprises instructions configured to cause a controller (32) executing the authentication logic (40) to generate a control signal to output the selected version to the user responsive to receiving an authentication result.
